Europäisches Patentamt

European Patent Office

Office européen des brevets

(11) Veröffentlichungsnummer: **0 618 264 A2**

## (12) EUROPÄISCHE PATENTANMELDUNG

(21) Anmeldenummer: **94104074.3**

(22) Anmeldetag: **16.03.94**

(51) Int. Cl.5: **C08L 67/02**, //(C08L67/02, 75:04)

(30) Priorität: **29.03.93 DE 4309981**
**29.04.93 DE 4314039**
**29.04.93 DE 4314040**
**29.04.93 DE 4314041**
**06.12.93 DE 4341459**

(43) Veröffentlichungstag der Anmeldung:
**05.10.94 Patentblatt 94/40**

(84) Benannte Vertragsstaaten:
**DE FR GB IT**

(71) Anmelder: **BAYER AG**

**D-51368 Leverkusen (DE)**

(72) Erfinder: **Magerstedt, Herbert, Dipl.-Ing.**
**Hölderlinstrasse 16**
**D-47445 Moers (DE)**
Erfinder: **Idel, Karsten-Josef, Dr.**
**Am Schwarzkamp 38**
**D-47802 Krefeld (DE)**
Erfinder: **Siebourg, Wolfgang, Dr.**
**Augustastrasse 24**
**D-53173 Bonn (DE)**

(54) **Thermoplastische Formmassen aus Polyalkylenterephthalat und thermoplastischem Polyurethan.**

(57) Thermoplastische Formmassen aus
A) 65 bis 99 Gew.-% Polyalkylenterephthalat, und
B) 1 bis 35 Gew.-% thermoplastischem Polyurethan.

EP 0 618 264 A2

Rank Xerox (UK) Business Services
(3.10/3.09/3.3.4)

Die Erfindung betrifft thermoplastische Formmassen aus Polyalkylenterephthalat und thermoplastischem Polyurethan sowie aus diesen thermoplastischen Formmassen herstellbare und verwendbare Formkörper.

DE-OS 41 13 891 und EP-A 334 186 beschreiben Formmassen aus thermoplastischem Polyurethzan und u.a. Polyalkylenterephthalaten, wobei der Anteil an Polyurethan überwiegt.

US-PS 4 169 479 beschreibt thermoplastische Polyurethanelastomermischungen aus 40 bis 100 % eines thermoplastischen Polyurethans, 0 bis 60 % eines thermoplastischen Polymeren (Polycarbonat) und 0,5 bis 10 % eines Acrylpolymeren. Die Produkte zeichnen sich durch eine gute Homogenität der Mischung und die Formteile durch einen verbesserten Glanz aus.

Aus dem US-Patent 4 350 799 bzw. dem EP-A 0 074 594 sind Mischungen von thermoplastischen Polyurethanen, thermoplastischen Polyphosphonaten und thermoplastischen Polycarbonaten bekannt, welche eine verbesserte Flammwidrigkeit besitzen.

Die Aufgabe der vorliegenden Erfindung ist, eine thermoplastische Formmasse auf Basis von Polyalkylenterephthalaten und thermoplastischem Polyurethan herzustellen, die leichtfließend ist und aus der Formkörper mit zähelastischen Eigenschaften herstellbar sind.

Gegenstand der vorliegenden Erfindung sind thermoplastische Formmassen aus

A:     65 bis 99, vorzugsweise 70 bis 98, insbesondere 75 bis 98 Gew.-% Polyalkylenterephthalaten

und

B:     1 bis 35, vorzugsweise 2 bis 30, insbesondere 2 bis 25 Gew.-% thermoplastischem Polyurethan.

Die erfindungsgemäßen Mischungen zeichnen sich durch gute Fließfähigkeit, Zähigkeit, Elastizität, Hydrolysestabilität und Temperaturbeständigkeit sowie Chemikalienbeständigkeit aus. Die erfindungsgemäßen Formmassen zeichnen sich weiter durch eine nicht zu erwartende gute Verträglichkeit der Mischungspartner Polyalkylenterephthalat mit thermoplastischem Polyurethan aus.

Die thermoplastischen Formmassen haben als Extrusionsmaterial eine besondere Bedeutung z.B. als Isoliermaterial für die Kabelindustrie.

Weiterhin lassen sich aus den Formmassen im Spritzgießverfahren hergestellte Formkörper, insbesondere für Bauteile aus dem Elektrosektor einsetzen, z.B. als Stoßkante für Staubsaugergehäuse, in der Nachrichtentechnik oder in der Automobilindustrie.

Komponente A:

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reactionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80, vorzugsweise 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Dipbenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4- 2-Methylpentandiol-2,4, 2,2,4-Trimethylpentandiol-1,3 und -1,6,2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-$\beta$-hydroxyethoxyphenyl)-propan und 2,2-bis-(4-hydroxypropoxyphenyl)-propan (DE-OS 2 407 674, 2 407 776, 2 715 932).

Die Polyalkylenterephthalate können durch Einbau relativ kleiner Mengen 3-oder 4-wertiger Alkohole oder 3- oder 4-basischer Carbonsäure, wie sie z.B. in der DE-OS 1 900 270 und der US-PS 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt worden sind, besonders bevorzugte Copolyester sind Poly-(ethylenglykol/butandiol-1,4)-terephthalate.

Die als Komponente A, vorzugsweis verwendeten Polyalkylenterephtalate besitzen im allgemeinen eine Schmelzviskosität von ca. 300 bis 1.000 Pas, vorzugsweise 350 bis 900 Pas, gemessen nach Göttfert.

Ein Teil der Polyalkylenterephthalat-Komponente kann durch aromatisches Polycarbonat ersetzt werden. Auch die erfindungsgemäße Zugabe von wiederaufgearbeiteten Bestandteilen der thermoplastischen Formmassen ist möglich, ohne daß die genannten Eigenschaften sich nachteilig verändern.

Komponente B:

Thermoplastische Polyurethane gemäß Komponente B vorliegender Erfindung sind Reaktionsprodukte aus Diisocyanaten, ganz oder überwiegend aliphatischen Oligo- und/oder Polyestern und/oder -ethern, sowie einem oder mehreren Kettenverlängerern. Diese thermoplastischen Polyurethane sind im wesentlichen linear und besitzen thermoplastische Verarbeitungscharakteristiken.

Die thermoplastischen Polyurethane sind entweder bekannt oder können nach bekannten Verfahren (siehe beispielsweise US-PS 3 214 411, J.H. Saunders und K.C. Frisch, "Polyurethanes, Chemistry and Technology", Vol. II, Seiten 299 bis 451, Interscience Publishers, New York, 1964 und Mobay Chemical Coporation, "A Processing Handbook for Texin Urethane Elastoplastic Materials", Pittsburgh, PA) hergestellt werden.

Ausgangsmaterialien zur Herstellung von Oligoester und Polyester sind beispielsweise Adipinsäure, Bernsteinsäure, Subecinsäure, Sebacinsäure, Oxalsäure, Methyladipinsäure, Glutarsäure, Pimelinsäure, Azelainsäure, Phthalsäure, Terephthalsäure und Isophthalsäure.

Adipinsäure ist hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Dimethylpropylenglykol in Betracht. Darüberhinaus können gemeinsam mit den Glykolen kleine Mengen, bis zu 1 Mol-%, tri- oder höher functionelle Alkohole, z.B. Trimethylolpropan, Glycerin, Hexantriol usw. eingesetzt werden.

Die resultierenden Hydroxyl-oligo- oder -polyester haben ein Molekulargewicht von wenigstens 600, eine Hydroxylzahl von ca. 25 bis 190, vorzugsweise ca. 40 bis 150, eine Säurezahl von ca. 0,5 bis 2 und einen Wassergehalt von ca. 0,01 bis 0,2 %.

Oligoester bzw. Polyester sind auch oligomere oder polymere Lactone, wie beispielsweise Oligocaprolacton oder Poly-caprolacton, und aliphatische Polycarbonate, wie beispielsweise Poly-butandiol-(1,4)-carbonat oder Poly-hexandiol-(1,6)-carbonat.

Ein besonders geeigneter Oligorest, der als Ausgangsmaterial für die thermoplastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 liegt.

Oligo- bzw. Polyether zur Herstellung der thermoplastischen Polyurethane gemäß Komponente B sind beispielsweise solche auf Basis von Tetramethylenglykol, Propylenglykol und Ethylenglykol.

Polyacetale sind ebenfalls als Polyether zu verstehen und einsetzbar.

Die Oligoether bzw. Polyether sollen mittlere Molekulargewicht $\overline{M}n$ (Zahlenmittel, ermittelt über die OH-Zahl der Produkte) von 600 bis 2.000, vorzugsweise von 1.000 bis 2.000 haben.

Als organisches Diisocyanat wird zur Herstellung der Polyurethane gemäß Komponente B vorzugsweise 4,4'-Diphenylmethan-diisocyanat verwendet. Es sollte weniger als 5 % 2,4'-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von ca. 0,005 bis 0,2 % liegt. Die Acidität, gerechnet als HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane gemäß Komponente B verwendet werden, beispielsweise die Diisocyanate des Ethylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens, des n-Phenylens, des Xylens, des 1,4-Naphthylens, des 1,5-Naphthylens, des 4,4'-Diphenylens, des 2,2-Diphenylpropan-4,4'-diisocyanat, das Azobenzol-4,4'-diisocyanat, des Diphenylsulfon-4,4'-diisocyanat, das Dichlorhexanmethylendiisocyanat, das Pentamethylen-diisocyanat, das Hexamethylen-diisocyanat, das 1-Chlorbenzol-2,4-diisocyanat, das Furfuryl-diisocyanat, das Dicyclohexylmethandiisocyanat, das Isophorondiisocyanat, das Diphenylmethan-diisocyanat und Bis-(isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-$\beta$-hydroxyethylether, 1,3-Phenylen-bis-$\beta$-hydroxethylether, Bis-(hydroxymethyl-cyclohexan), Hexandiol, Adipinsäure, $\omega$-Hydroxycapronsäure, Thiodiglykol, Ethylendiamin-, Propylen, Butylen-, Hexamethylen-, Cyclohexylen-, Phenylen-, Toluylen-, Xylylen-diamin, Diaminodicyclohexylmethan, Isophorondiamin, 3,3'-Dichlorbenzidin, 3,3'-Dinitrobenzidin, Ethanolamin, Aminopropylalkohol, 2,2-Dimethyl-propanolamin, 3-Aminocyclohexylalkohol und p-Aminobenzylalkohol zu nennen. Das Molverhältnis Oligo- bzw. Polyester zu bifunktionellen Kettenverlängerer bewegt sich im Bereich 1:1 bis 1:50, vorzugsweise 1:2 bis 1:30.

Außer difunktionellen Kettenverlängerern können auch in untergeordneten Mengen bis zu etwa 5 Mol-%, bezogen auf Mole eingesetzten bifunktionellen Kettenverlängerer, trifunkionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der thermoplastischen Polyurethane gemäß Komponente B eingesetzt werden.

Die als Bausteine für die thermoplastischen Polyurethane genannten Diisocyanate, Oligoester, Polyester, Polyether, Kettenverlängerer und monofunktionellen Komponenten sind entweder literaturbekannt oder nach literaturbekannten Verfahren erhältlich.

Die bekannte Herstellung der Polyurethan-Komponente B kann beispielsweise, wie folgt, durchgeführt werden:

So können beispielsweise die Oligo- bzw. Polyester, die organischen Diisocyanate und die Kettenverlängerer für sich vorzugsweise auf eine Temperatur von ca. 50 bis 220°C erhitzt und dann vermischt werden. Vorzugsweise werden die Oligo- bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann entweder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verkleinern. Zur Erhöhung der Reaktionsgeschwindigkeit können geeignete Katalysatoren, wie z.B. tertiäre Amine,die in dem US-Patent 2 729 618 genannt werden, zur Anwendung kommen.

Die Formmassen können Nukleierungsmittel wie Mikrotalk enthalten. Weiterhin können die Formmassen übliche Zusatzstoffe wie Gleit- und Entformungsmittel, Verarbeitungsstabilisatoren, Füll- und Verstärkungsstoffe sowie Farbstoffe und Pigmente enthalten.

Die Nukleierungsmittel und üblichen Zusatzstoffe außer Füll- und Verstärkungsstoffe können in Mengen von ca. 0,1 bis 3 Gew.-Teilen, bezogen auf 100 Gew.-Teile thermoplastische Formmasse, aus A + B + C zugegeben werden.

Füll- und Verstärkungsstoffe können in Mengen von 1 bis 60 Gew.-Teilen, bezogen auf 100 Gew.-Teile A + B + C zugegeben werden.

Die Herstellung der erfindungsgemäßen Formmassen kann in den üblichen Mischaggregaten wie Walzen, Knetern, Ein- oder Mehrwellenextrudern durch Vermischen der Einzelkomponenten erhalten werden.

### Beispiele

Die in den Beispielen angegebenen Komponenten werden gemischt und in einer Spritzgußmaschine bei üblichen PBT-Verarbeitungsbedingungen (Massetemperatur ca. 260°C) zu Prüfkörpern verarbeitet.

**Beispiel 1** (Vergleich)

100,0 Gew.-% Polybutylenterephthalat (PBT), Schmelzviskosität 850 +/- 50 Pa.s (Göttfert) (relative Lösungsviskosität 1,834 bis 1,875, gemessen in einer 0,5%igen Lösung aus Phenol und o-Dichlorbenzol bei 25 °C, Mischungsverhältnis 1:1 Gew.-Teile)

**Beispiel 2** (erfindungsgemäß)

97,0 Gew.-% Polybutylenterephthalat (PBT), Schmelzviskosität 850 +/- 50 Pa.s (Göttfert)
3,0 Gew.-% thermoplastisches Polyurethan, Desmopan® 385, Bayer AG (Reaktionsprodukt eines Adipinsäure-Butandiol-Polyesters mit 4,4'-Diphenylmethandiisocyanat, Butandiol-1,4 als Kettenverlängerer, Verseifungszahl >250)

**Beispiel 3** (erfindungsgemäß)

80,0 Gew.-% Polybutylenterephthalat (PBT), Schmelzviskosität 850 +/- 50 Pa.s (Göttfert)
20,0 Gew.-% thermoplastisches Polyurethan, Desmopan® 385, Bayer AG (Reaktionsprodukt eines Adipinsäure-Butandiol-Polyesters mit 4,4'-Diphenylmethandiisocyanat, Butandiol-1,4 als Kettenverlängerer, Verseifungszahl >250)

**Beispiel 4** (erfindungsgemäß)

70,0 Gew.-% Polybutylenterephthalat (PBT), Schmelzviskosität 850 +/- 50 Pa.s (Göttfert)
30,0 Gew.-% thermoplastisches Polyurethan, Desmopan® 385, Bayer AG (Reaktionsprodukt eines Adipinsäure-Butandiol-Polyesters mit 4,4'-Diphenylmethandiisocyanat, Butandiol-1,4 als Kettenverlängerer, Verseifungszahl >250)

Tabelle 1

| Prüfergebnisse | | | | | | |
|---|---|---|---|---|---|---|
| Eigenschaften | Dimension | Vorschrift | Bsp.1 (Vergleich) | Bsp.2 (erf.) | Bsp.3 (erf.) | Bsp.4 (erf) |
| MVI*, 240 °C/5 kg | cm$^3$/10min | DIN 53735 | 20 | 25 | 34 | 48 |
| Biegeversuch | | | | | | |
| Biegefestigkeit | N/mm$^2$ | DIN 53452 | 88 | 83 | 63 | 52 |
| Randfaserdeh-nung b. Bruch | % | DIN 53452 | 5,9 | 6,0 | 6,2 | 6,2 |
| E-Modul | N/mm$^2$ | DIN 53457-B3 | 2440 | 2290 | 1710 | 1410 |
| Izod-Kerbeschlagzähigkeit | kJ/m$^2$ | ISO 180/1A | 5,1 | 5,2 | 16,0 | 70,0 |
| Wärmeformbeständigkeit | | | | | | |
| Vicat B 120 | °C | DIN 53460 | 183 | 180 | 147 | 117 |
| Shore-Härte D | | DIN 53505 | 80 | 80 | 75 | 71 |

*MVI = Melt Volume Index

Tabelle 2

| Zusammensetzung der Formmassen | | | |
|---|---|---|---|
| Zusammensetzung | Vergleichsbeispiel | Beispiel 5 (erfindungsgemäß) | Beispiel 2 (erfindungsgemäß) |
| Komponente 1 | 100 Gew.-% | 99 Gew.-% | 97 Gew.-% |
| Komponente 2 | | 1 Gew.-% | 3 Gew.-% |
| Komponenete 1 = Polybutylenterephathalat mit einer relativen Lösungsviskosität von 1,855 gemessen in einer 0,5%igen Lösung aus Phenol und Dichlorphenol (Mischungsverhältnis 1:1 Gew.-Teile). ("Pocan B 1800", Handelsprodukt der BAYER AG) Komponente 2 = thermoplastisches Polyesterurethan mit einer Verseifungszahl >250, Reaktionsprodukt eines Adipinsäure-Butandiol-Polyesters mit 4,4'-Diphenylmethandiisocyanat, Butandiol-1,4 als Kettenverlängerer ("Desmopan 385", Handelsprodukt der BAYER AG) | | | |

Die Herstellung der erfindungsgemäßen Formmassen erfolgte auf einer ZSK 32 bei Massetemperaturen von 260 bis 300°C, indem Komponente 1 mit der Komponente 2 gemischt und gemeinsam aufgeschmolzen wurde. Der Strang wurde durch ein Wasserbad abgesponnen und granuliert. Das Granulat wurde bei 120°C getrocknet und zu 50 %-Proportional-Zugstäben gemäß DIN 53457 (Dicke 1,5 mm) bei 260°C (Formtemperatur 80°C) abgespritzt. Die Zugstäbe wurden vor und nach Lagerung in Wasser bei 100°C im Zugversuch nach DIN 53455 geprüft.

Tabelle 3

| Prüfergebnisse | | | | | | |
|---|---|---|---|---|---|---|
| | Prüfergebnisse nach n Tagen Wasserlagerung bei 100°C $H_2O$ | | | | | |
| n = | 0 | 1 | 3 | 4 | 5 | 6 |
| Vergleichsbeispiel | | | | | | |
| Reißdehnung (%) | 150 | 156 | 186 | 104 | 49 | 30 |
| Reißfestigkeit (MPa) | 35,4 | 34 | 37,9 | 30,5 | 40,1 | 37,9 |
| Beispiel 5 | | | | | | |
| Reißdehnung (%) | 233 | 179 | 220 | 104 | 132 | 48 |
| Reißfestigkeit (MPa) | 35,7 | 34,6 | 34,9 | 30,5 | 32,1 | 33,7 |
| Beispiel 2 | | | | | | |
| Reißdehnung (%) | 294 | 293 | 229 | 114 | 80 | 36 |
| Reißfestigkeit (MPa) | 50,2 | 35,0 | 33,2 | 32,0 | 29,6 | 38,6 |

Die Prüfergebnisse aus dem Zugversuch belegen, daß der Zusatz geringer Mengen der Komponente 2 eine deutliche Verbesserung der Reißdehnungswerte bewirkt, die auch nach 6-tägiger Wasserlagerung unter Beibehaltung der guten Reißfestigkeit über denen des Vergleichsmaterials liegen.

**Patentansprüche**

1. Thermoplastische Formmassen aus
   A) 65 bis 99 Gew.-% Polyalkylenterephthalat, und
   B) 1 bis 35 Gew.-% thermoplastischem Polyurethan.

2. Formmasse gemäß Anspruch 1, worin Komponente
   A) Polybutylenterephthalat oder Polyethylenterephthalat oder Mischungen daraus ist,
   B) Komponente B Reaktionsprodukte aus Diisocyanaten und Oligo- und/oder Polyester und/oder Polyethern mit Kettenverlängerern sind.

6

3. Formmasse gemäß Anspruch 1, dadurch gekennzeichnet, daß sie Nukleierungsmittel, Gleit-, Entformungsmitel, Stabilisatoren, Farbstoffe, Pigmente und/oder Füll- und Verstärkungsstoffe enthalten.

4. Verwendung der Formmassen gemäß Anspruch 1, zur Herstellung von Formkörpern.

5. Formkörper, hergestellt aus Formmassen gemäß Anspruch 1.